(19) Europäisches Patentamt
European Patent Office
Office européen des brevets

(11) EP 2 287 007 A1

(12) **EUROPEAN PATENT APPLICATION**
published in accordance with Art. 153(4) EPC

(43) Date of publication:
**23.02.2011 Bulletin 2011/08**

(21) Application number: **09746685.8**

(22) Date of filing: **11.05.2009**

(51) Int Cl.:
***B41M 5/26*** *(2006.01)* ***G03C 1/73*** *(2006.01)*
***G11B 7/24*** *(2006.01)* ***G11B 7/244*** *(2006.01)*

(86) International application number:
**PCT/JP2009/059100**

(87) International publication number:
**WO 2009/139479 (19.11.2009 Gazette 2009/47)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **12.05.2008 JP 2008124716**

(71) Applicant: **Sony Corporation**
**Tokyo 108-0075 (JP)**

(72) Inventors:
- **IWAMURA, Takashi**
  **Tokyo 108-0075 (JP)**
- **OYAMADA, Mitsuaki**
  **Tokyo 108-0075 (JP)**
- **UEDA, Daisuke**
  **Tokyo 108-0075 (JP)**

(74) Representative: **Malden, Nicholas**
**D Young & Co LLP**
**120 Holborn**
**London EC1N 2DY (GB)**

(54) **OPTICAL INFORMATION RECORDING MEDIUM, AND TWO-PHOTON ABSORBING MATERIAL**

(57) The invention allows two-photon absorption to occur in response to a short-wavelength light beam. The recording layer (101) of the optical information recording medium (100) of the invention contains, as a two-photon absorbing material, a compound represented by general formula (1) having a hexadiyne structure that includes in the center thereof two acetylene groups connected by a σ-bond. At the time of information recording where a recording mark (RM) is formed in the recording layer (101), two-photon absorption occurs in response to a condensed, short-wavelength recording light, whereby the recording mark (RM) is formed.

FIG.1(A)

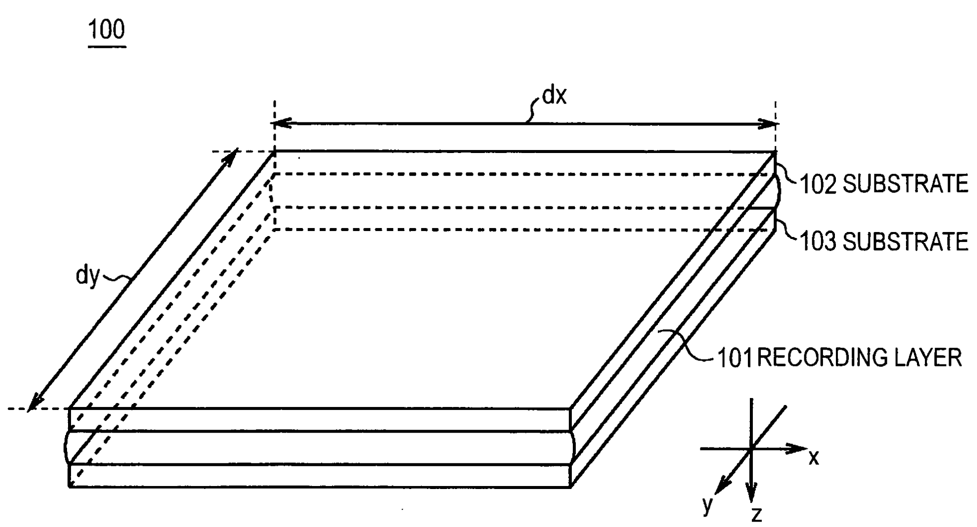


EP 2 287 007 A1

FIG.1(B)

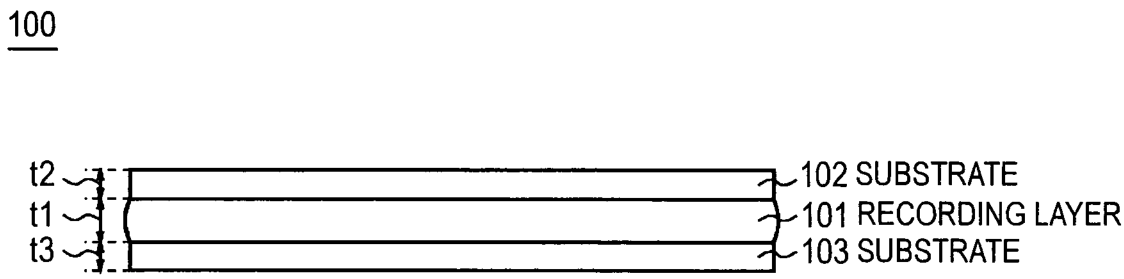
100
t2
t1
t3
102 SUBSTRATE
101 RECORDING LAYER
103 SUBSTRATE

## Description

### Field of the Invention

The present invention relates to an optical information recording medium and a two-photon absorbing material. The invention is suitable for application to, for example, an optical information recording medium that records information using an optical beam and also reproduces the information using the optical beam.

### Background of the Invention

As optical information recording media, disk-shaped optical information recording media have been widely used. For example, CD (Compact Disc), DVD (Digital Versatile Disc), and Blu-ray Disc (registered trademark, hereinafter referred to as BD) are in common use.

Meanwhile, in an optical information recording and reproducing apparatus for such an optical information recording medium, a variety of information is recorded in the optical information recording medium, including music contents, image contents, and like various contents, as well as various data for computers. Particularly, with the recent improvements in image resolution and sound quality, etc., the amount of information is growing. Also, there is a demand for a greater number of contents to be recorded in one optical information recording medium. For these reasons, optical information recording media with even higher capacity have been desired.

As an approach to increase the capacity of an optical information recording medium, an optical information recording medium configured to record information three-dimensionally in the thickness direction of the optical information recording medium has been proposed. An example of such an optical information recording medium is one that has a recording layer containing a two-photon absorbing material that foams upon two-photon absorption, so that a recording mark consisting of bubbles is formed by light beam irradiation (see, e.g., Patent Document 1).

Patent Document 1: JP-2005-37658

In such an optical information recording medium, a recording mark is formed through two-photon absorption of a red light beam (e.g., 600 to 750 [nm]) that is used for CD or DVD.

It is generally known that when a laser beam is condensed by an objective lens, the resulting spot size is determined by the wavelength of the light beam and the numerical aperture of the objective lens. Therefore, for the purpose of achieving a smaller recording mark to increase the capacity of the optical information recording medium, it is desirable to use a short-wavelength light beam to reduce the spot size.

A two-photon absorbing material absorbs light in proportion to the square of light intensity. Therefore, in an optical information recording medium, a recording mark is formed only at the central portion of a spot, where the light intensity is highest. When the size of a spot is large, the light beam has a reduced intensity per unit area. As a result, in the optical information recording medium, the intensity of the outgoing light beam has to be increased so as to increase the light intensity at the central portion.

In such a case, in the optical information recording medium, because a recording mark is formed in response only to the central portion of the light beam, this results in increased portions of the light beam not participating in the formation of the recording mark, leading to decreased efficiency in using the light beam.

However, with respect to two-photon absorbing materials that exhibit two-photon absorption in response to a short-wavelength light beam with a wavelength of less than 600 [nm], such as a blue-violet light beam with a wavelength of 405 [nm] used in BD, no materials that satisfy the conditions for two-photon absorption to occur have been found, and no such materials have been yet proposed.

The invention was accomplished against the above background, and is aimed to propose a two-photon absorbing material capable of exhibiting two-photon absorption in response to a short-wavelength light beam; and an optical information recording medium using the two-photon absorbing material.

### Disclosure of the Invention

In order to solve the above problems, the optical information recording medium of the invention includes a recording layer containing a two-photon absorbing material represented by general formula (1), and allowing a recording mark to be formed therein through two-photon absorption in response to a recording light condensed at the time of information recording.

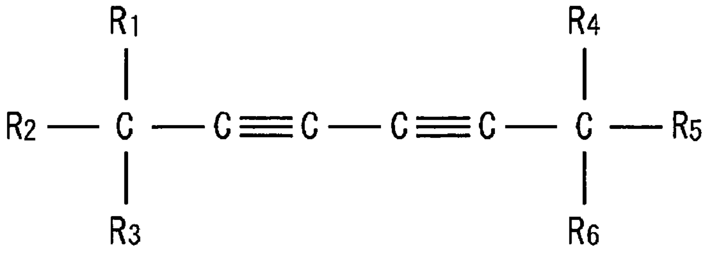

… general formula (1)

This satisfies the conditions that the two-photon absorbing material represented by general formula (1) exhibits two-photon absorption in response to a short-wavelength light beam.

Further, the two-photon absorbing material of the invention is a compound represented by general formula (1) and exhibits two-photon absorption in response to light.

This satisfies the conditions that the two-photon absorbing material represented by general formula (1) exhibits two-photon absorption in response to a short-wavelength light beam.

The invention thus achieves a two-photon absorbing material capable of exhibiting two-photon absorption in response to a short-wavelength light beam; and an optical information recording medium using the two-photon absorbing material.

Brief Description of the Drawings

Fig. 1 is a schematic diagram showing the structure of an optical information recording medium.
Fig. 2 is a schematic diagram showing the structure of an optical information recording and reproducing apparatus.
Fig. 3 is a schematic diagram for explaining the formation of a recording mark through two-photon absorption.
Fig. 4 is a schematic diagram for explaining the recording of information.
Fig. 5 is a schematic diagram for explaining the reproduction of information.
Fig. 6 is a schematic diagram showing the electron density of a compound A.
Fig. 7 is a schematic diagram showing the electron density of a compound B.
Fig. 8 is a schematic diagram showing the electron density of a compound C.
Fig. 9 is a schematic diagram showing the electron density in the HOMO of a compound D.
Fig. 10 is a schematic diagram showing the electron density in the LUMO of the compound D.

Best Mode of Carrying Out the Invention

Hereinafter, an embodiment of the invention is explained in detail with reference to the drawings.

(1) Structure of optical information recording medium

As shown in Fig. 1, (A) and (B), an optical information recording medium 100 has a substrate 102, a substrate 103, and a recording layer 101 therebetween, and thus as a whole functions as an information recording media.

The substrates 102 and 103 are glass substrates, so that light is transmitted at a high rate. The substrates 102 and 103 are in the form of square plates or rectangular plates, where the length dx in the direction X and the length dy in the direction Y are each about 50 [mm], and the thicknesses t2 and t3 are each about 0.6 to about 1.1 [mm] .

The outer surfaces of the substrates 102 and 103 (faces that do not contact the recording layer 101) have been subjected to AR (Anti Reflection coating) treatment to form, for example, a multilayer inorganic layer (e.g., four layers of $Nb_2O_2/SiO_2/Nb_2O_5/SiO_2$) that does not reflect light beams with wavelengths of 405 [nm] and 300 [nm].

By selecting materials therefor or treating the surfaces thereof, the substrates 102 and 103 may also be configured to block ultraviolet light with a wavelength of less than 400 [nm]. As a result, the substrates 102 and 103 prevent the recording layer 101 from being exposed to ultraviolet light, thereby improving the durability of the recording layer 101.

The substrates 102 and 103 are not limited to glass plates, and any of various optical materials including acryl

resin, polycarbonate resin, and the like can be used. For example, when polycarbonate resin is used for the substrates 102 and 103, this provides the substrates 102 and 103 with the function of blocking ultraviolet light. The thicknesses t2 and t3 of the substrates 102 and 103 are not limited to the above examples, and can be suitably selected in a range of 0.05 [mm] to 1.2 [mm] . The thicknesses t2 and t3 may be the same or different. Further, the outer surfaces of the substrates 102 and 103 do not necessarily have to be subjected to the AR treatment.

The recording layer 101 is designed so that the thickness t1 thereof (= 0.01 [mm] to 0.5 [mm]) is sufficiently larger than the height of a recording mark RM. The recording layer 101 thus allows a plurality of recording marks to be formed therein not only in the plane direction but also in the thickness direction of the optical information recording medium 100, so that the recording marks are arranged three-dimensionally.

The recording layer 101 has a binder resin as the principal component, and contains a two-photon absorbing material dispersed in the binder resin. The two-photon absorbing material foams upon two-photon absorption of a light beam.

As the binder resin, any of various resin materials with high light beam transmittance can be used. For example, thermoplastic resin that softens when heated, photo-curable resin that cures through photo-crosslinking or photopolymerization, heat-curable resin that cures through thermal crosslinking or thermal polymerization, and the like are usable.

Resin materials are not limited. PMMA (polymethylmethacrylate) resin, acryl resin, polycarbonate resin, norbornene resin, nitrocellulose, and the like are preferable in terms of weatherability, light transmittance, and the like.

Considering weatherability, a resin material that transmits no ultraviolet light beam of less than 400 [nm] may be used for the binder resin, and it is also possible to add an ultraviolet-absorbing material to the resin material. In addition, considering recording characteristics, manufacturing characteristics, strength characteristics, and the like, various additives may be added to the binder resin.

A material used as the two-photon absorbing material is one that exhibits two-photon absorption in response to a light beam of not less than 400 [nm] and less than 600 [nm], thereby generating heat. A preferred example of the two-photon absorbing material is one that exhibits two-photon absorption in response to a blue-violet light beam of not less than 400 [nm] and less than 500 [nm]. Foaming due to the two-photon absorption is a reaction by pyrolysis, that is, it takes place in the heat mode.

Generally, a two-photon absorbing material is known to exhibit two-photon absorption when the following conditions are satisfied in the molecular orbitals thereof.

First, in the highest occupied molecular orbital (hereinafter referred to as HOMO) that is the highest energy orbital among the molecular orbitals occupied by electrons, it is required that the electron density be concentrated symmetrically at the opposite ends of a region involved in light absorption.

In the lowest unoccupied molecular orbital (hereinafter referred to as LUMO) that is the lowest energy orbital among the molecular orbitals unoccupied by electrons, it is required that the electron density be concentrated symmetrically at the central portion of the region involved in light absorption.

Further, in order to achieve two-photon absorption of a high-energy, blue-violet light beam, the two-photon absorbing material is required to have a larger electron energy difference between HOMO and LUMO than does a compound capable of two-photon absorption of a red light beam.

Specifically, as the two-photon absorbing material, a compound with a hexadiyne structure as represented by general formula (1) is used.

In the hexadiyne structure, among the six carbons, the 3- and 4-position carbons at the center have a single bond between them. There also is a triple bond between the 2- and 3-position carbons and also between the 4- and 5-position carbons. The hexadiyne is capable of forming a derivative with a symmetric structure about the center between the 3- and 4-position carbons.

Further, in the two-photon absorbing material, it is preferable that the 1-position carbon bonded to $R_1$ to $R_3$ and the 6-position carbon bonded to $R_4$ to $R_6$ form $sp^3$-hybrid orvitals, and, in general formula (1), at least one of $R_1$ to $R_3$ and at least one of $R_4$ to $R_6$ are each a phenyl group. The phenyl group is optionally substituted with, for example, chlorine, a methoxyl group, a hydroxy group, an alkyl group, etc.

Accordingly, the two-photon absorbing material allows the formation of phenyl $\pi$-orbitals. At the same time, the 1-position carbon and the 6-position carbon form $sp^3$-hybrid orbitals, whereby the $\pi$ electrons are prevented from being distributed to the center of the hexadiyne structure. Therefore, the electron density in the HOMO of the two-photon absorbing material can be concentrated on the phenyl groups, which are equivalent to the opposite ends of the molecule, while one-photon absorption that is ordinary optical absorption in the visible region of wavelengths of 400 [nm] or longer can be prevented.

Preferred examples of such two-photon absorbing materials include 1,1,6,6-tetraphenyl-hexa-2,4-diyne-1,6-diol represented by general formula (2) (manufactured by Aldrich, S54527); 1,6-bis(2-chlorophenyl)-1,6-diphenyl-2,4-hexadiyne-1,6-diol represented by general formula (3) (manufactured by Tokyo Chemical Industry, B1508); 1,1,6,6-tetrakis-(3-methoxy-phenyl)-hexa-2,4-diyne-1,6-diol represented by general formula (4) (manufactured by Aldrich, S109509); and 1,6-bis-(4-methoxy-phenyl)-1,6-diphenyl-hexa-2,4-diyne-1,6-diol represented by general formula (5)

(manufactured by Aldrich, S57054).

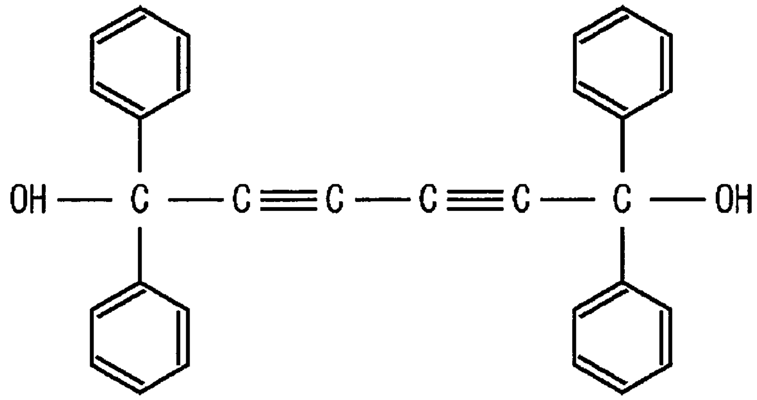

… general formula (2)

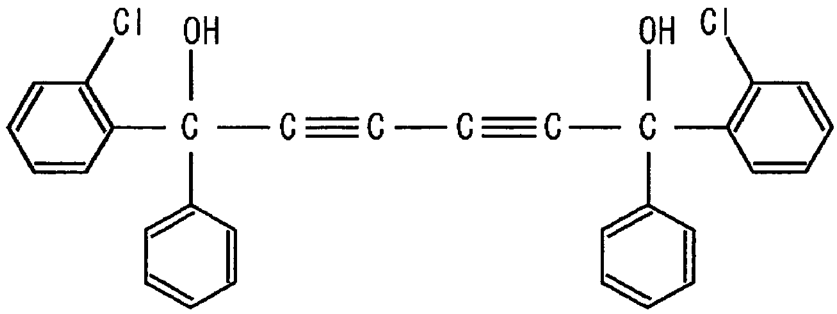

… general formula (3)

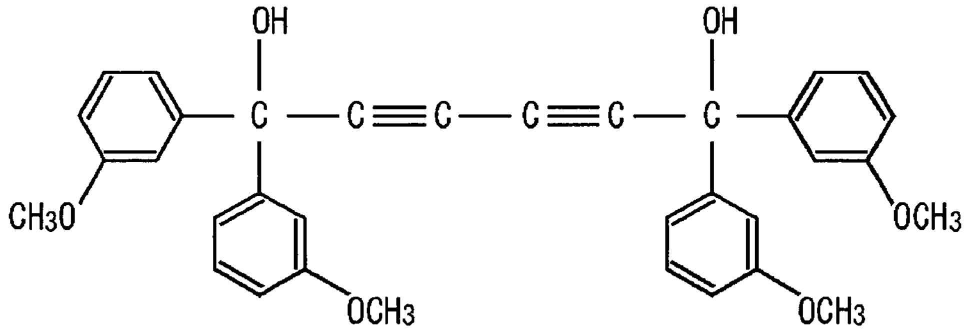

... general formula (4)

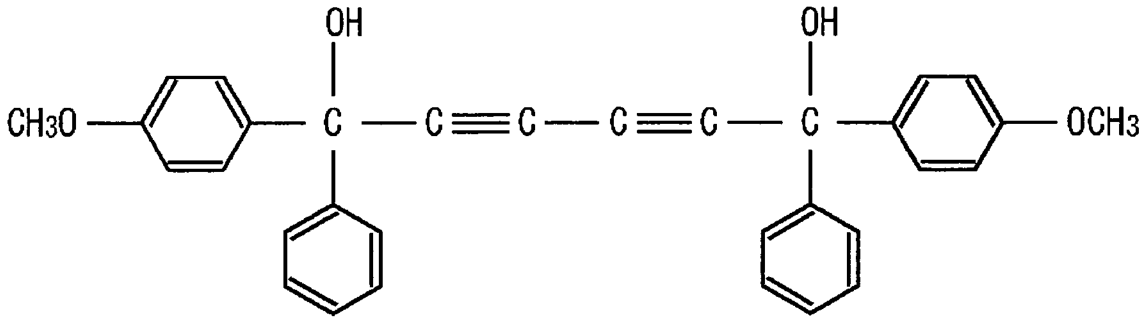

... general formula (5)

In the case where, for example, a thermoplastic resin is used as the binder resin, the two-photon absorbing material is added to a heated thermoplastic resin and kneaded in a kneading machine, thereby dispersing the two-photon absorbing material in the binder resin.

The binder resin having dispersed therein the two-photon absorbing material is then spread over the substrate 103 and cooled to form a recording layer 101. Subsequently, the substrate 102 is attached to the recording layer 101 using a UV adhesive, for example. An optical information recording medium 100 can thus be produced.

In the case where the thermoplastic resin is diluted with an organic solvent or the like (hereinafter, this thermoplastic resin is called a solvent-diluted resin to distinguish from a thermoplastic resin to be shaped by heating), the two-photon absorbing material is predispersed in an organic solvent, and then a solvent-diluted resin is dissolved in the organic solvent. Alternatively, the two-photon absorbing material may be added to a solvent-diluted resin that is diluted with an organic solvent, followed by stirring. The two-photon absorbing material is thus dispersed in the binder resin.

The binder resin having dispersed therein the two-photon absorbing material is then spread over the substrate 103 and dried by heating to form a recording layer 101. Subsequently, the substrate 102 is attached to the recording layer 101 using a UV adhesive, for example. An optical information recording medium 100 can thus be produced.

In the case where a heat-curable resin or a photo-curable resin is used the binder resin, the two-photon absorbing material is added to an uncured resin material and then stirred, thereby dispersing the two-photon absorbing material in the binder resin.

Subsequently, the binder resin having dispersed therein the two-photon absorbing material is then spread over the substrate 103, and the uncured recording layer 101 is subjected to heat-curing or photo-curing with the substrate 103 being mounted thereon. An optical information recording medium 100 can thus be produced.

It is also possible to bind the two-photon absorbing material to the binder resin. The two-photon absorbing material in this case is first dispersed in the binder resin and then heated, for example, whereby the material is bound to the binder resin. The two-photon absorbing material may also be directly bound to the binder resin using a functional group thereof or indirectly bound to the binder resin using a coupling agent or the like.

(2) Structure of optical information recording and reproducing apparatus

In Fig. 2, an optical information recording and reproducing apparatus 1 as a whole is configured such that the recording layer 101 of the optical information recording medium 100 is irradiated with light, whereby information is recorded in a plurality of possible recording mark layers in the recording layer 101 (hereinafter referred to as virtual recording mark layers) and the information is reproduced. Recording marks RM formed in the recording layer 101 are irreversible. The optical information recording and reproducing apparatus 1 thus records information in the recording layer 101 in a write-once fashion.

The optical information recording and reproducing apparatus 1 has a controller 2 formed of CPU (Central Processing Unit) that provides centralized control. Various programs including basic programs, information-recording programs, information-reproducing programs, and the like are read from a non-illustrated ROM (Read Only Memory), and stored in a non-illustrated RAM (Random Access Memory), so as to execute recording of information, reproduction of information, and like processing.

The controller 2 controls an optical pickup 5, so that the optical pickup 5 applies a light beam to a position to be irradiated with the light beam (hereinafter referred to as a target mark position) in the optical information recording medium 100, and also receives the light beam returning from the optical information recording medium 100.

In general, defining the numerical aperture of an objective lens as NA, and the wavelength of a light beam as λ, the spot diameter d resulting from the condensation of the light beam is as represented by the following formula:

$$d \propto \frac{\lambda}{NA} \qquad \cdots\cdots(1)$$

That is, when using the same objective lens 13, the numerical aperture NA is constant, and thus the spot diameter d is proportional to the wavelength λ of the light beam.

In the case of two-photon absorption, the reaction takes place only when two photons are simultaneously absorbed. Therefore, the photoreaction takes place in proportion to the square of light intensity. Accordingly, in the optical information recording medium 100 of this embodiment, as shown in Fig. 3, a recording mark RM is formed only in the vicinity of the focus Fb of a recording light beam L1, where the light intensity is extremely high.

The size of the recording mark RM is smaller as compared with the spot diameter d of the recording light beam L1, and the diameter da thereof is also smaller. As a result, in the optical information recording medium 100, recording marks RM can be formed at high density, enabling an increase in storage capacity. However, if a reading light beam L2 of the same wavelength as that of the recording light beam L1 is applied, a large proportion of reading light beam L2 will not be directly applied to the recording marks RM, resulting in a great loss of the reading light beam L2. Also, the reading light beam L2 will possibly be reflected by recording marks RM adjoining the target mark position and interfere with a return light beam L3, causing so-called cross talk. Of course, depending on the desired recording density, the wavelength may be the same between the recording light and the reading light.

The optical pickup 5 in the optical information recording and reproducing apparatus 1 according to this embodiment has, as light sources, a recording light source 10 and a reproducing light source 15. At the time of information recording, the optical pickup 5 uses a recording light beam L1 with a wavelength of, for example, 500 [nm], while at the time of information reproduction, the optical pickup 5 uses a reading light beam L2 with a shorter wavelength (e.g., 405 [nm]) than the wavelength for the information recording.

At the time of information recording, as shown in Fig. 4, based on control by the controller 2, the optical pickup 5 causes the recording light beam L1 with a wavelength 500 [nm] to be emitted from the recording light source 10 formed of a picosecond laser, for example, and, after converting the recording light beam L1 from a divergent light to a parallel light by a collimating lens 11, causes the light beam L1 to enter a dichroic prism 12.

The dichroic prism 12 has a reflective/transmissive surface 12S that reflects or transmits a light beam depending on the wavelength. When the recording light beam L1 enters the dichroic prism 12, the reflective/transmissive surface 12S transmits the recording light beam L1, and causes it to enter the objective lens 13. The objective lens 13 condenses the recording light beam L1 to focus the beam on an arbitrary point in the optical information recording medium 100, so that, for example, the two-photon absorbing material evaporates, thereby forming a recording mark RM consisting of

bubbles.

At this time, at the focus Fb of the recording light beam L1, the spot diameter d of the recording light beam L1 is relatively small corresponding to the short wavelength. The recording light beam L1 thus has a small area in the vicinity of the focus Fb, and the light intensity thereof is accordingly is high.

As a result, in the optical information recording medium 100, a recording mark RM can be rapidly formed by decomposition of the two-photon absorbing material or the binder at the focus Fb. Further, in the optical information recording medium 100, two-photon absorption occurs only at a portion where the light intensity is high, and therefore, in the vicinity of the focus Fb of the recording light beam L1, a recording mark RM with a diameter da smaller than the spot diameter d of the recording light beam L1 is formed.

Further, as shown in Fig. 5, at the time of information reproduction, based on control by the controller 2, the optical pickup 5 causes the reading light beam L2 with a wavelength 405 [nm] to be emitted from the reproducing light source 15, and, after converting the reading light beam L2 from a divergent light to a parallel light by a collimating lens 16, causes the light beam L2 to enter a beam splitter 17.

The beam splitter 17 transmits the reading light beam L2 at a predetermined rate, and causes it to enter the dichroic prism 12.

The dichroic prism 12 reflects the reading light beam L2 by the reflective/transmissive surface 12S, and causes it to enter the objective lens 13. The objective lens 13 condenses the reading light beam L2 to focus the beam on an arbitrary point in the optical information recording medium 100.

When a recording mark RM is formed in the focus position of the reading light beam L2, due to the difference in refractive index between the recording layer 101 and the recording mark RM, the optical information recording medium 100 reflects the reading light beam L2, whereby a return light beam L3 is generated. When no recording mark RM is formed in the focus position of the reading light beam L2, the optical information recording medium 100 transmits the reading light beam L2, whereby no return light beam L3 is generated.

When there is a return light beam L3 from the optical information recording medium 100, the objective lens 13 converts the return light beam L3 into a parallel light, and causes it to enter the dichroic prism 12. The dichroic prism 12 then reflects the return light beam L3 by the reflective/transmissive surface 12S, and causes it to enter the beam splitter 17.

The beam splitter 17 reflects a part of the return light beam L3, and causes it to enter a condensing lens 18. The condensing lens 18 condenses the return light beam L3, and irradiates a photoreceptor 19 with the light beam L3.

In response, the photoreceptor 19 detects the light quantity of the return light beam L3, then produces a detection signal corresponding to the detected light quantity, and sends out the signal to the controller 2. Based on the detection signal, the controller 2 can recognize the return light beam L3 detection state.

Incidentally, the optical pickup 5 is provided with a non-illustrated actuator. Based on control by the controller 2, the optical pickup 5 is freely movable in triaxial directions including the direction Z that is the direction of the optical axis of the recording light beam L1, the direction X that is perpendicular to the direction Z, and the direction Y. As a result, the optical pickup 5 can freely form recording marks RM in the target mark positions that are arranged three-dimensionally in the recording layer 101.

Actually, the controller 2 is configured to control the position of the optical pickup 5 so that the focus positions of the recording light beam L1 and the reading light beam L2 can be adjusted to the desired target mark position.

As described above, the optical information recording and reproducing apparatus 1 applies the short-wavelength recording light beam L1 in such a manner that the light beam L1 is concentrated on the small focus Fb, thereby allowing the two-photon absorbing material to efficiently undergo a photoreaction at the focus Fb, and enabling the formation of small recording marks RM corresponding to the wavelength.

The optical information recording and reproducing apparatus 1 also applies the reading light beam L2 having a smaller spot diameter than that of the recording light beam L1. Therefore, the optical information recording and reproducing apparatus 1 can apply the reading light beam L2 with a spot diameter suitable for a recording mark RM, thereby preventing a loss in the reading light beam L2, while suppressing crosstalk.

(3) Examples

In this example, with respect to the compounds of the above general formulae (2) to (5), the electron density and the electron energy in HOMO and LUMO were calculated by the molecular orbital method. Table 1 shows the electron energy in the HOMO and the LUMO of each compound, together with the difference in the electron energy between HOMO and LUMO (hereinafter referred to as energy difference). Hereinafter, the compounds of general formula (2), general formula (3), general formula (4), and general formula (5) are called a compound A, a compound B, a compound C, and a compound D, respectively.

Table 1

| Compound | HOMO [eV] | LUMO [eV] | Energy difference [eV] |
|---|---|---|---|
| A | -9.5948 | -0.0932 | 9.5016 |
| B | -9.2481 | -0.0885 | 9.1596 |
| C | -9.0566 | 0.0055 | 9.0621 |
| D | -9.2107<br>(-9.2098) | 0.0228 | 9.2335<br>(9.2326) |

As mentioned above, in order for two-photon absorption to occur in response to a short-wavelength, blue-violet light beam, the energy difference between HOMO and LUMO has to be large. As calculated by this molecular orbital method, a difference of 8.0 to 10.0 [eV] is desirable.

As shown in the table, the compounds A to D all have an energy difference of about 9.0 to about 9.5 [eV], thus satisfy the condition that the energy difference is large.

The compound D had two HOMO orbitals with practically the same electron energy, so two electron energy values are given for the HOMO.

Figs. 6 to 10 show the electron density in the HOMO and the LUMO of each of the compounds A to D. The line color intensity in the figures represents the difference in molecular orbital phase (plus or minus).

As mentioned above, in order for two-photon absorption to occur in response to a short-wavelength, blue-violet light beam, it is required that the electron density be symmetrical about the two acetylene groups both in HOMO and LUMO, with the electron density in HOMO being localized in the outer regions, while the electron density in LUMO being localized in the inner region.

The compound A has general formula (1) wherein $R_1$, $R_3$, $R_4$, and $R_6$ are each a phenyl group, and $R_2$ and $R_5$ are each a hydroxy group.

As shown in Fig. 6(A), the electron density in the HOMO of the compound A has symmetry and is localized in the vicinity of the outer phenyl groups. Further, as shown in Fig. 6(B), the electron density in the LUMO of the compound A has symmetry and is localized in the vicinity of the inner hexadiyne structure.

Accordingly, the compound A is highly likely to undergo a photoreaction through two-photon absorption in response to a blue-violet light beam.

The compound B has general formula (1) wherein $R_2$, $R_3$, $R_5$, and $R_6$ are each a phenyl group, with the phenyl groups of $R_2$ and $R_5$ each having chlorine (Cl) at position-2 (meta position), and $R_1$ and $R_4$ are each a hydroxy group (OH).

As shown in Fig. 7, as compared with the compound A, the compound B has the electron density changed due to the influence of chlorine that is an electron-withdrawing group. However, the electron density in HOMO and LUMO is similar to the case of compound A.

The compound C has general formula (1) wherein $R_2$, $R_3$, $R_5$, and $R_6$ are each a phenyl group, with the four phenyl groups each having a methoxyl group ($OCH_3$) at position-3 (ortho position), and $R_1$ and $R_4$ are each a hydroxy group.

The compound D has general formula (1) wherein $R_2$, $R_3$, $R_5$, and $R_6$ are each a phenyl group, with the phenyl groups of $R_2$ and $R_5$ each having a methoxyl group at position-3 (para position), and $R_1$ and $R_4$ are each a hydroxy group.

As shown in Figs. 8 to 10, as compared with the compound A, the compounds C and D also have the electron density changed due to the influence of a methoxyl group, but the electron density in HOMO and LUMO is similar to the case of compound A.

As above, in the compounds A to D that satisfy general formula (1), the electron density is symmetrical about the two acetylene groups both in HOMO and LUMO, with the electron density in HOMO being localized in the outer regions, while the electron density in LUMO being localized in the inner region. The compounds thus all satisfy the conditions required for two-photon absorption to occur in response to a blue-violet light beam.

(4) Operation and effects

According to the above structure, the recording layer 101 of the optical information recording medium 100 has a two-photon absorbing material with a hexadiyne structure represented by general formula (1), and allows a recording mark to be formed therein through two-photon absorption in response to a recording light condensed at the time of information recording.

Accordingly, in the recording layer 101 allows a recording mark to be formed therein in response to a recording light beam L1 with a short wavelength of less than 600 [nm]. Therefore, the spot diameter d of the recording light beam L1 can be smaller than in the case of a red light beam of not less than 600 [nm].

As a result, in the recording layer 101, the light intensity at the focus Fb can be increased, the efficiency in

using the recording light beam L1 can be improved, and the light intensity at the time of the recording light beam L1 emission can be reduced, as compared with the case where a red light beam is emitted with the same light intensity.

Therefore, the recording layer 101 allows a picosecond laser, such as a semiconductor laser, to be used as the recording light source 10, in place of a femtosecond laser capable of emitting a laser beam with an extremely high light intensity. Accordingly, the structure of the optical information recording and reproducing apparatus 1 can be simplified.

Fruther, the recording layer 101 makes it possible to reduce the size of a recording mark RM to suit the spot diameter d of the recording light beam L1, whereby the storage capacity of the optical information recording medium 100 can be improved.

It is generally known that the probability that two-photon absorption by two-photon absorbing material will occur is proportional to the square of light intensity. Therefore, the recording layer 101 allows the recording light beam L1 to be absorbed only in the vicinity of the focus Fb1 of the recording light beam L1, i.e., near the target mark position. As a result, the recording light beam L1 is barely absorbed in different virtual recording mark layers (hereinafter referred to as other recording mark layers) other than the virtual recording mark layer that includes the target mark position (hereinafter referred to as an irradiated recording mark layer).

As a result, in the recording layer 101, the recording light beam L1 transmittance of the entire recording layer 101 can be improved, and the target mark position can be efficiently irradiated with the recording light beam L1.

Further, the recording layer 101 contains the two-photon absorbing material represented by general formula (1), wherein the 1-position carbon and the 6-position carbon form $sp^3$-hybrid orbitals, and at least one of $R_1$ to $R_3$ and at least one of $R_4$ to $R_6$ are each a phenyl group or a substituted phenyl group.

As a result, in the HOMO of the two-photon absorbing material, the electron density can be concentrated in the outer regions, so that two-photon absorption occurs easily.

Further, the recording layer 101 contains as the two-photon absorbing material a compound bearing the same substituents at $R_1$ and $R_4$, $R_2$ and $R_5$, and $R_3$ and $R_6$, and thus having a symmetrical structure about the two acetylene groups.

The resulting recording layer 101 allows the electron density to be practically symmetrical both in the HOMO and the LUMO of the two-photon absorbing material.

Further, in the recording layer 101, the two-photon absorbing material exhibits two-photon absorption in response to a blue-violet light beam.

A conventional two-photon absorbing material that absorbs a red light beam is deteriorated due to absorption of blue-violet light or ultraviolet light with a wavelength shorter than the red light beam wavelength. Accordingly, in order to use such a material for a recording layer, it is necessary to block blue-violet light and ultraviolet light, causing an increase in cost.

In order for the two-photon absorbing material of the invention to be used for the recording layer 101, it is necessary to block only ultraviolet light with a wavelength shorter than that of the recording light beam L1, which is blue-violet light. As compared with materials that absorb blue-violet light, materials that absorb ultraviolet light are used more widely, and thus can be selected from a wider range at lower cost. Therefore, the two-photon absorbing material provides higher flexibility in design of the optical information recording medium 100, and also enables cost reduction.

Further, the recording layer 101 allows a recording mark RM consisting of bubbles to be formed therein. Therefore, such a recording mark RM can be formed in response to a recording light beam L1 applied from one direction. As a result, the structure of the optical information recording and reproducing apparatus 1 can be simplified.

Further, in the recording layer 101, a plurality of recording marks RM are formed in the optical axis direction of the recording light beam L1 and in the direction perpendicular to the optical axis direction, so that the recording marks are formed three-dimensionally.

As a result, in the recording layer 101, the irradiated recording mark layer has to be irradiated with the recording light beam L1 that is applied through the other recording mark layers on the substrate 102 side where the recording light beam L1 enters. Accordingly, in the recording layer 101, the virtual recording mark layers located near the substrate 102 are particularly subjected to multiple, repeated exposures to the recording light beam L1.

A volume recording medium, such as the optical information recording medium 100, which records a recording mark RM three-dimensionally, has a number of virtual recording mark layers. For example, with respect to a virtual recording mark layer that is the first layer from the substrate 102, by the time when information is recorded in the $20^{th}$ virtual recording mark layer, such a first layer is exposed to the recording light beam L1 for other recording layers at least 19 times.

However, in the case of the recording layer 101, the two-photon absorbing material hardly absorbs the recording light beam L1 in other recording mark layers. Accordingly, the recording light beam L1 applied to the irradiated recording mark layer has almost no influence on the other recording mark layers. As a result, as compared with a recording layer 101 that forms recording marks RM through one-photon absorption or thermal response that takes place in proportion to light intensity, the recording layer 101 has improved durability.

Further, the optical information recording medium 100 includes ultraviolet light blocking layers formed by selecting the materials for the substrates 102 and 103 or by treating the surfaces thereof. The ultraviolet light filtering layers are formed to sandwich the recording layer 101 and do not transmit ultraviolet light.
Accordingly, in the optical information recording medium 100, the recording layer 101 is protected from ultraviolet light exposure. This prevents the two-photon absorbing material from degradation due to ultraviolet exposure, and degradation of the recording layer 101 can also be prevented.
According to the above structure, the recording layer 101 of the optical information recording medium 100 contains the two-photon absorbing material with a hexadiyne structure, and thus allows a recording mark RM to be formed therein in response to the short-wavelength recording light beam L1. This thus achieves a two-photon absorbing material capable of two-photon absorption of a short-wavelength light beam; and an optical information recording medium using the two-photon absorbing material.

(5) Other embodiments

Although the above embodiment showed the case where at least one of $R_1$ to $R_3$ and at least one of $R_4$ to $R_6$ are each a phenyl group or a substituted phenyl group, the invention is not limited thereto. A phenyl group or a substituted phenyl group does not necessarily have to be included.
Further, although the above embodiment showed the case where a two-photon absorbing material is dispersed in or bound to a binder resin, the invention is not limited thereto. The two-photon absorbing material may also be dispersed in an inorganic material, such as glass.
Further, although the above embodiment showed the cases where various resin materials are used as binder resins, the invention is not limited thereto. For example, various additives and sensitizing dyes, such as cyanine-based, coumarin-based, and quinoline-based pigments, may also be added as required.
Further, although the above embodiment showed the case where two-photon absorption occurs in response to a recording light beam L1 with a wavelength of 500 [nm], the invention is not limited thereto. What is necessary is that two-photon absorption should occur in response to a light beam with a short wavelength of less than 600 [nm].
Further, although the above embodiment showed the case where the recording light beam L1 and the reading light beam L2 are each applied to the substrate 102 side of the optical information recording medium 100, the invention is not limited thereto, and the recording light beam L1 may be applied to the surface on the substrate 103 side, for example. Light or a light beam may be applied to either side or both sides.
Further, although the above embodiment showed the case where a reading light beam L2 with a shorter wavelength than that of the recording light beam L1 is used, the invention is not limited thereto. For example, it is possible to use the recording light beam L1 and the reading light beam L2 of the same wavelength, while changing the spot diameters thereof by switching between two objective lenses with different numerical apertures or using a throttling mechanism to vary the luminous flux diameter. When the light use efficiency of the recording light beam L1 is improved, and relatively large recording marks RM are formed, this may allow a use of the recording light beam L1 and the reading light beam L2 of the same wavelength without changing the aperture of the objective lens.
Further, in the second embodiment mentioned above, the recording light beam L1 emitted from the recording light source 10 and the reading light beam L2 do not always have to have wavelengths of 500 [nm] and 405 [nm], respectively, and they may also have other wavelengths. In short, what is necessary is that a recording mark RM consisting of bubbles should be formed in the vicinity of a target mark position in the recording layer 101.
Further, although the above embodiment showed the case where a recording mark RM is formed three-dimensionally, the invention is not limited thereto. For example, there may be only one virtual mark recording layer, whereby recording marks RM are formed two-dimensionally.
Further, although the above embodiment showed the case where the two-photon absorbing material evaporates upon two-photon absorption, thereby forming a recording mark RM consisting of bubbles, the invention is not limited thereto. For example, the two-photon absorbing material may have its refractive index changed through two-photon absorption, thereby forming a recording mark RM. In this case, it is also possible to divide a recording light beam L1 emitted from one light source into two beams, so that one and the same target mark position is irradiated with the beams from opposite directions, thereby forming recording marks RM by holography.
Further, although the above embodiment showed the case where the recording layer 101 of the optical information recording medium 100 has the shape of a square or a rectangle about 50 [mm] on a side with a thickness t1 of about 0.05 to about. 1.0 [mm], the invention is not limited thereto. The recording layer 101 may have any dimension or have any shape of any dimension, such as a rectangular parallelepiped. In this case, the thickness t1 in the direction Z is preferably determined in consideration of the transmittance for the recording light beam L1 and the reading light beam L2, etc.
The optical information recording medium 100 can be formed to have a disk-like shape, and be irradiated with the recording light beam L1 and the reading light beam L2 while the optical information recording medium 100 being

rotated, so that recording marks RM are formed in a concentric or spiral arrangement. For example, in order to achieve a capacity five times larger than in a two-layer BD with a storage capacity of 50 GB, the recording layer 101 preferably has a thickness of not less than 100

[μm].

In this connection, the shape of the substrates 102 and 103 is not limited to a square plate or a rectangular plate. The substrates may have any shape that suits the recording layer 101. Further, the material for the substrates 102 and 103 is not limited to glass, and may be polycarbonate, for example. In short, what is required for the material is just to exhibit a reasonably high transmittance for the recording light beam L1, the reading light beam L2, and the return light beam L3. It is also possible to dispose a photoreceptor that receives the transmitted light of the reading light beam L2 in place of the return light beam L3, thereby detecting the optical modulation of the reading light beam L2 depending on the presence of a recording mark RM, so that information is reproduced based on the optical modulation of the reading light beam L2. Further, when the recording layer 101 by itself has a desired intensity, the substrates 102 and 103 may be omitted from the optical information recording medium 100.

Further, although the above embodiment showed the case where the recording layer 101 as a recording layer forms the optical information recording medium 100 as an optical information recording medium, the invention is not limited thereto. The optical information recording medium may include any other recording layers with various structures.

Industrial Applicability

The invention is applicable to an optical information recording and reproducing apparatus that records mass information including image contents, sound contents, and the like in an optical information recording medium or like recording medium, or also reproduces such information.

## Claims

1. An optical information recording medium comprising a recording layer,
the recording layer containing a two-photon absorbing material represented by general formula (1), and allowing a recording mark to be formed therein through two-photon absorption in response to a recording light condensed at the time of information recording:

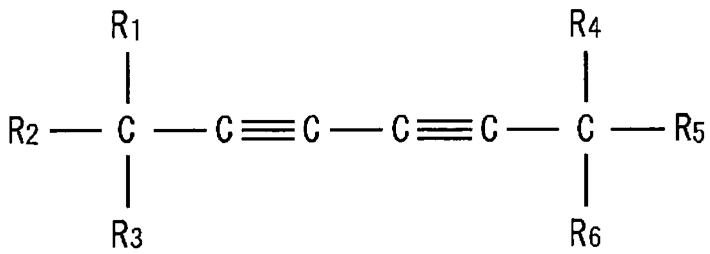

...... general formula (1).

2. An optical information recording medium according to claim 1, wherein:

   in the two-photon absorbing material, the 1-position carbon and the 6-position carbon form $sp^3$-hybrid orbitals, and at least one of $R_1$ to $R_3$ and at least one of $R_4$ to $R_6$ are each a phenyl group or a substituted phenyl group.

3. An optical information recording medium according to claim 2, wherein:

   the two-photon absorbing material exhibits two-photon absorption in response to a blue-violet light beam.

4. An optical information recording medium according to claim 2, wherein:

   the recording layer contains the two-photon absorbing material by dispersing the two-photon absorbing material

in a binder resin.

5. An optical information recording medium according to claim 2, wherein:

the recording layer contains the two-photon absorbing material by binding the two-photon absorbing material to a binder resin.

6. An optical information recording medium according to claim 2, wherein:

the recording layer allows a recording mark consisting of bubbles to be formed therein.

7. An optical information recording medium according to claim 2, wherein:

the recording layer allows a plurality of recording marks to be formed therein in the optical axis direction of the recording light and in the direction perpendicular to the optical axis direction, so that the recording marks are arranged three-dimensionally.

8. An optical information recording medium according to claim 2, further comprising ultraviolet light blocking layers that are formed to sandwich the recording layer therebetween and do not transmit ultraviolet light.

9. A two-photon absorbing material comprising a compound represented by general formula (1), and exhibiting two-photon absorption in response to light:

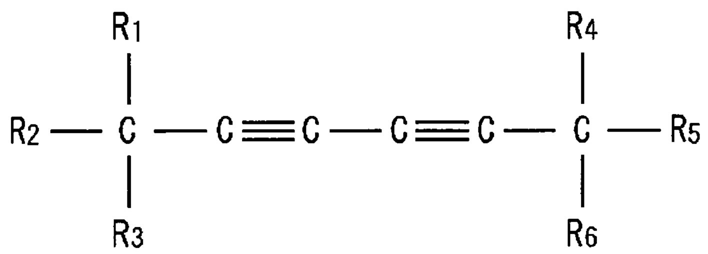

...... general formula (1).

FIG.1(A)

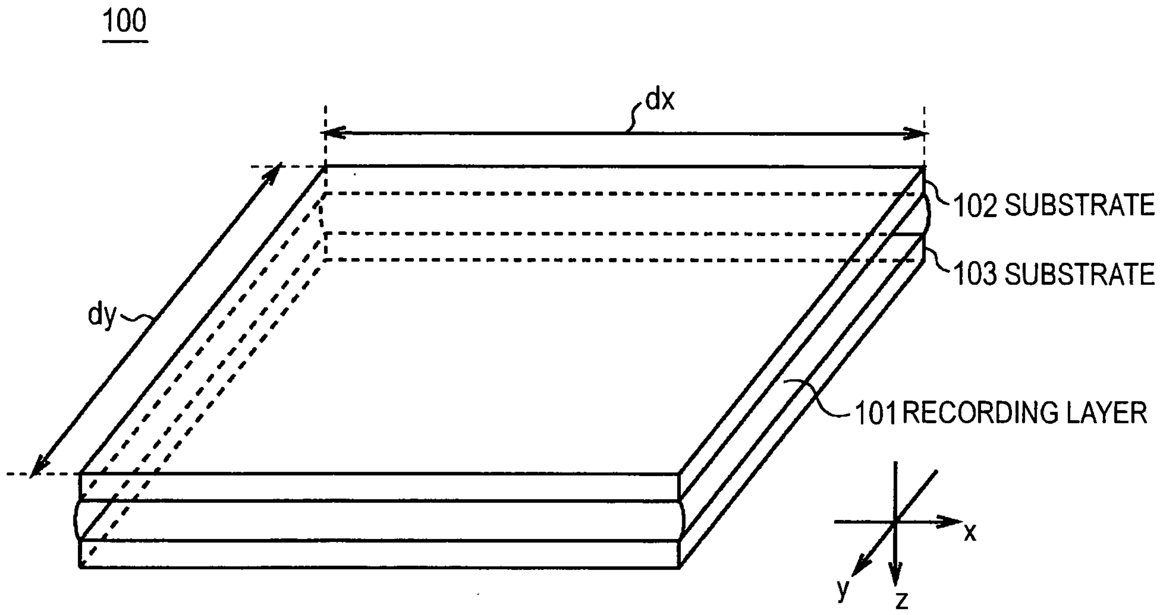
100
dx
dy
102 SUBSTRATE
103 SUBSTRATE
101 RECORDING LAYER
x
y
z

FIG.1(B)

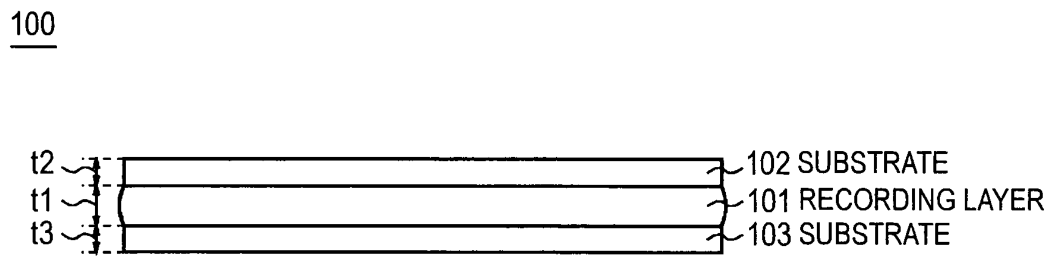
100
t2
t1
t3
102 SUBSTRATE
101 RECORDING LAYER
103 SUBSTRATE

FIG.2

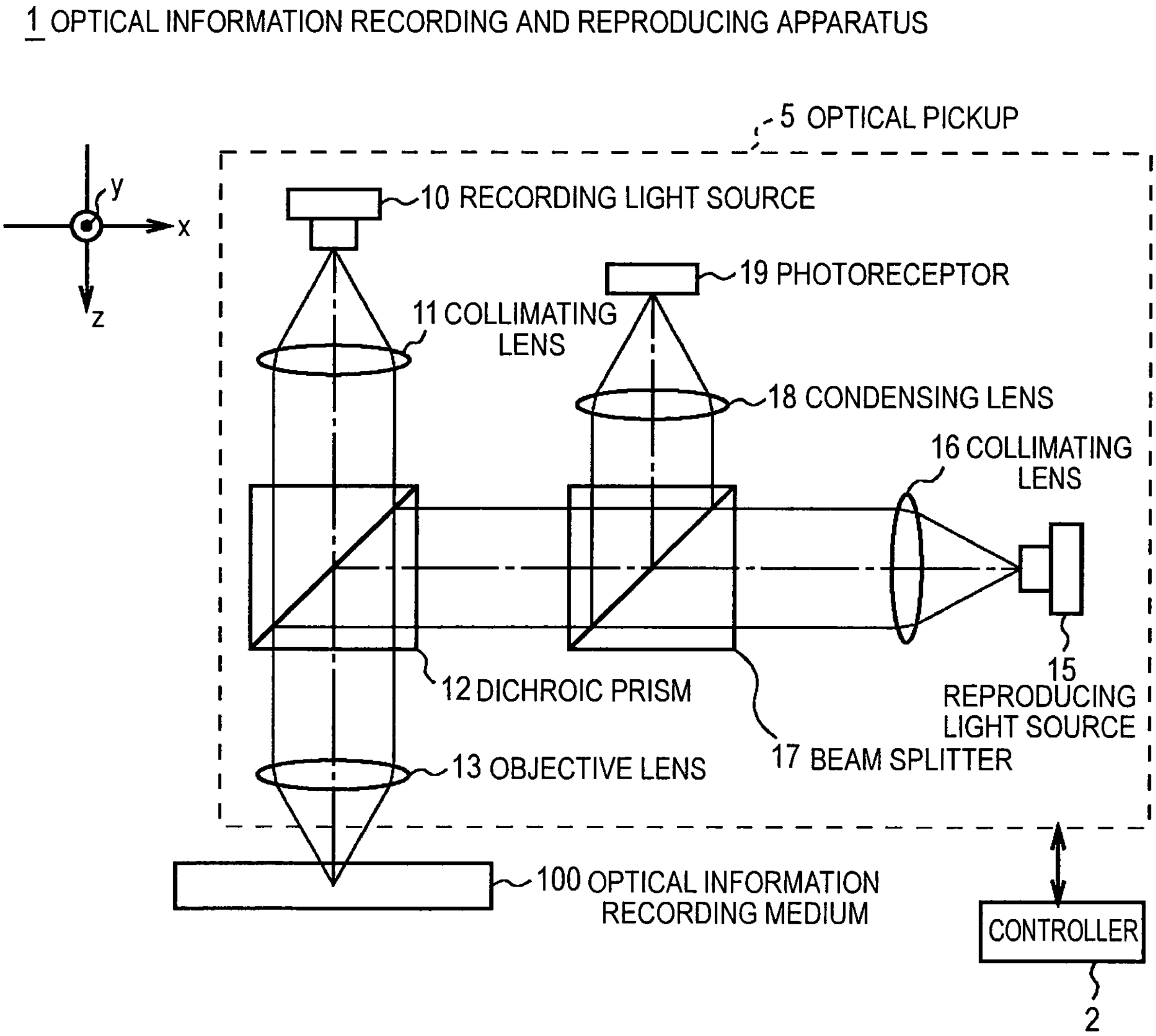
1 OPTICAL INFORMATION RECORDING AND REPRODUCING APPARATUS
5 OPTICAL PICKUP
y
x
z
10 RECORDING LIGHT SOURCE
19 PHOTORECEPTOR
11 COLLIMATING LENS
18 CONDENSING LENS
16 COLLIMATING LENS
12 DICHROIC PRISM
15 REPRODUCING LIGHT SOURCE
17 BEAM SPLITTER
13 OBJECTIVE LENS
100 OPTICAL INFORMATION RECORDING MEDIUM
CONTROLLER
2

FIG.3

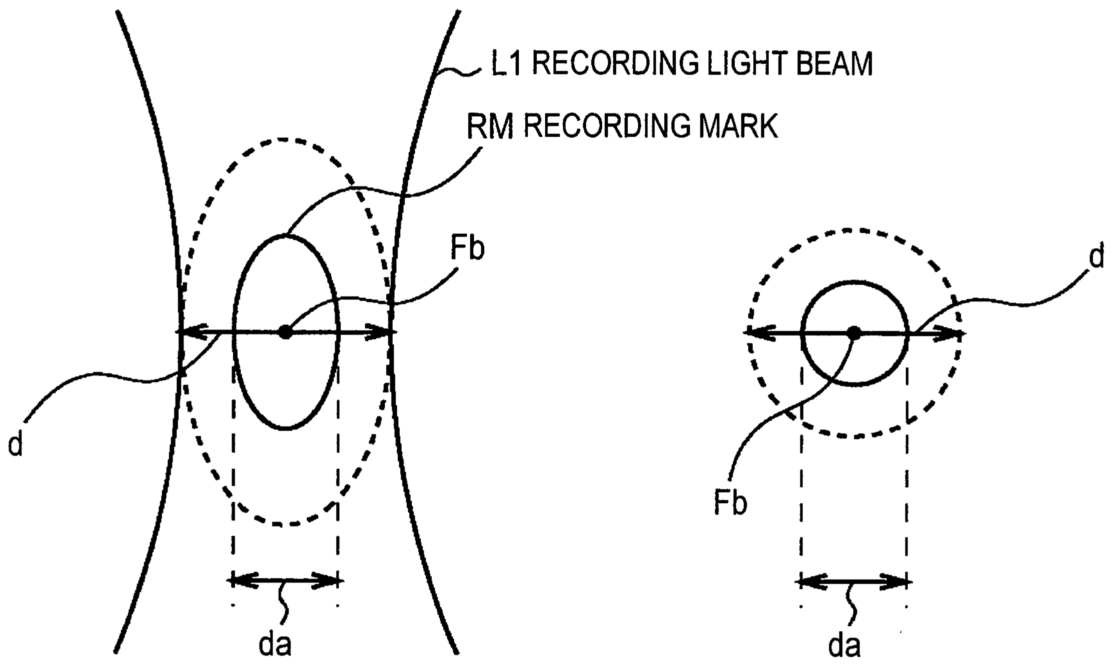

FIG.4

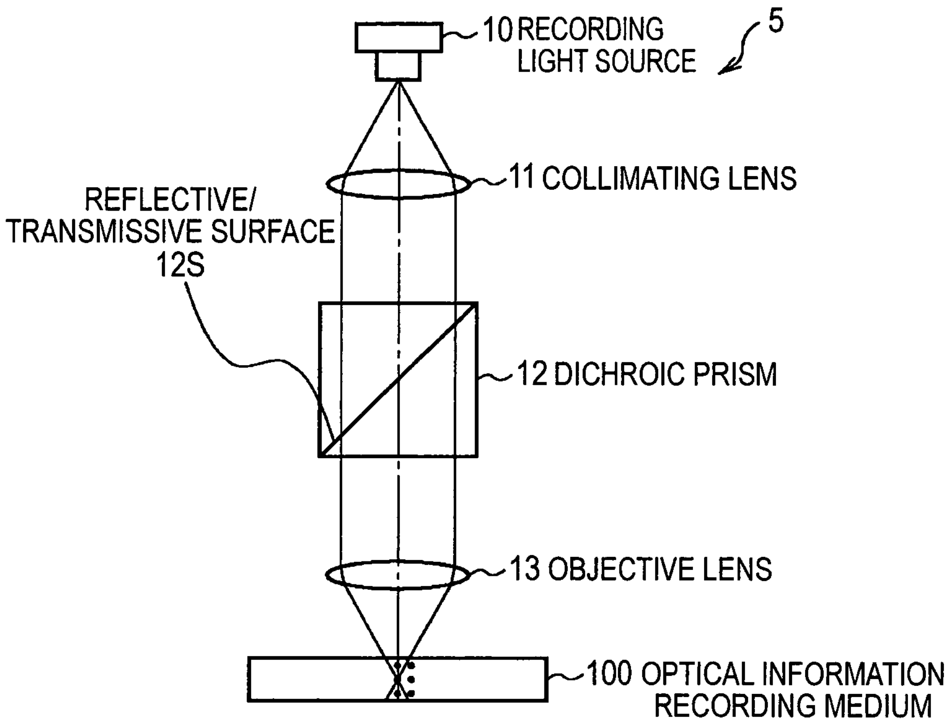
10 RECORDING LIGHT SOURCE
5
11 COLLIMATING LENS
REFLECTIVE/ TRANSMISSIVE SURFACE 12S
12 DICHROIC PRISM
13 OBJECTIVE LENS
100 OPTICAL INFORMATION RECORDING MEDIUM

FIG.5

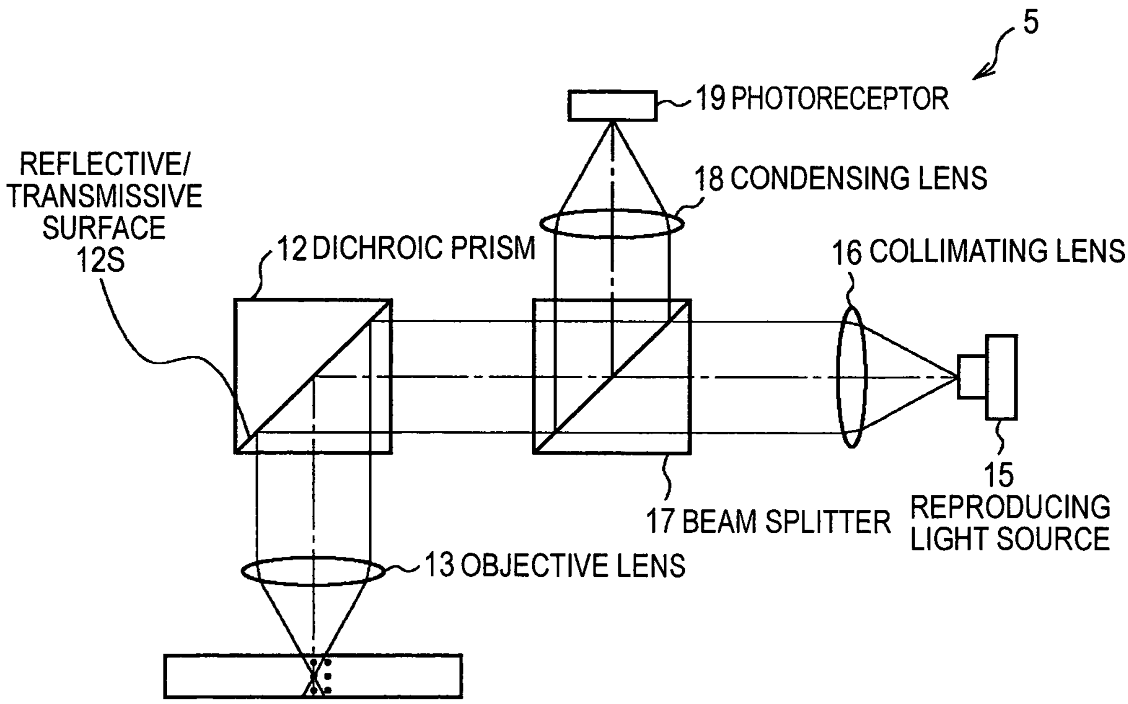
5
19 PHOTORECEPTOR
18 CONDENSING LENS
REFLECTIVE/ TRANSMISSIVE SURFACE 12S
12 DICHROIC PRISM
16 COLLIMATING LENS
15 REPRODUCING LIGHT SOURCE
17 BEAM SPLITTER
13 OBJECTIVE LENS

FIG.6(A)

MOLECULAR ORBITAL 77(ALPHA) -9.5948 ev 34a

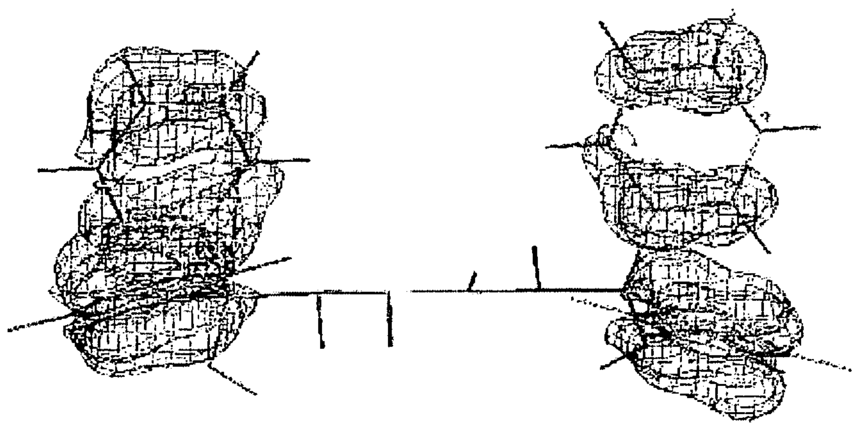

HOMO

FIG.6(B)

MOLECULAR ORBITAL 78(ALPHA) -0.0932 ev 35a

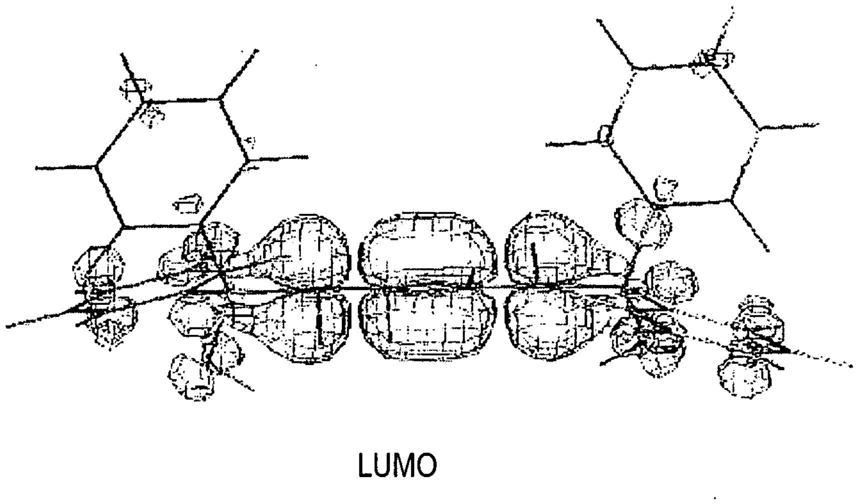

LUMO

FIG.7(A)

MOLECULAR ORBITAL 83(ALPHA) -9.2481 ev 42a

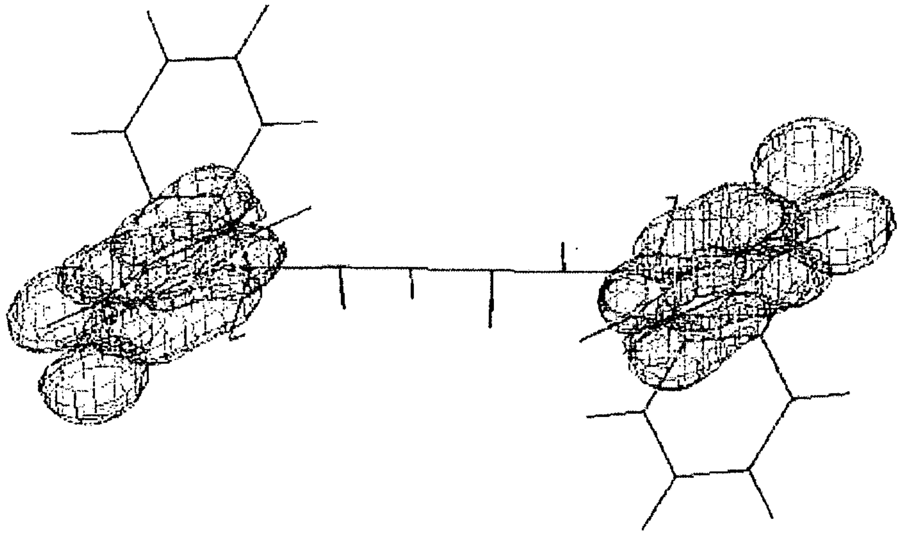

HOMO

FIG.7(B)

MOLECULAR ORBITAL 84(ALPHA) -0.0885 ev 42b

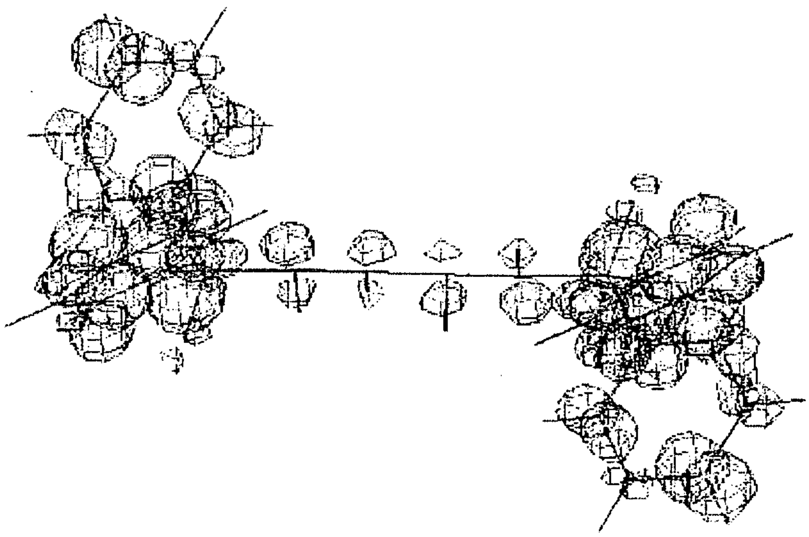

LUMO

FIG.8(A)

MOLECULAR ORBITAL 101(ALPHA) -9.0566 ev 47a

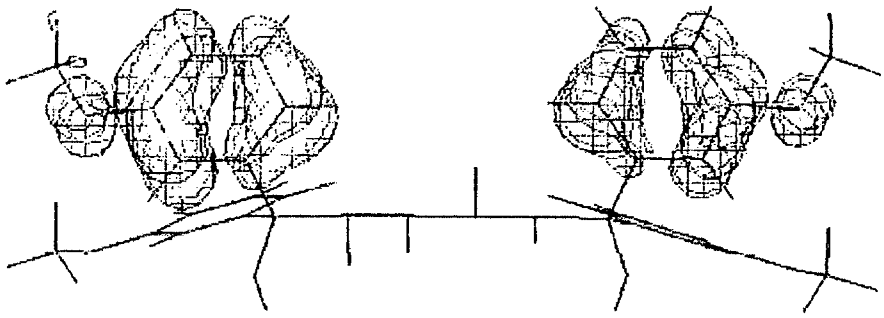

HOMO

FIG.8(B)

MOLECULAR ORBITAL 102(ALPHA) -0.0055 ev 48a

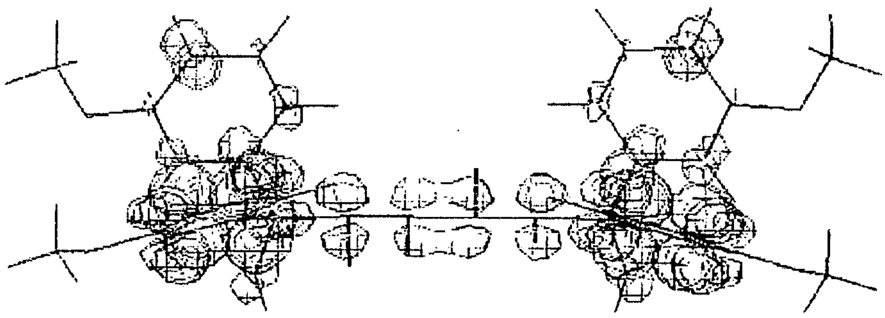

LUMO

FIG.9(A)

MOLECULAR ORBITAL 88(ALPHA) -9.2017 ev 88????

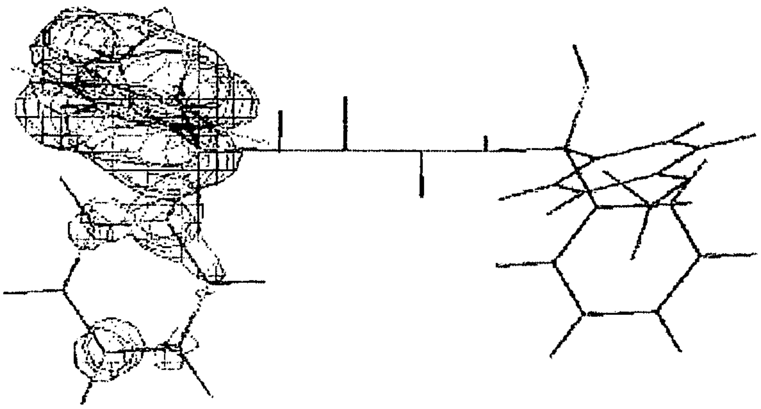

FIG.9(B)

MOLECULAR ORBITAL 89(ALPHA) -9.2098 ev 89????

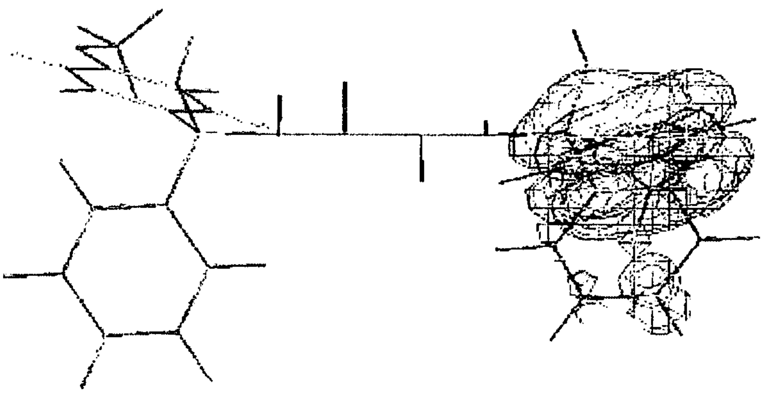

FIG.10

MOLECULAR ORBITAL 90(ALPHA) 0.0228 ev 39a

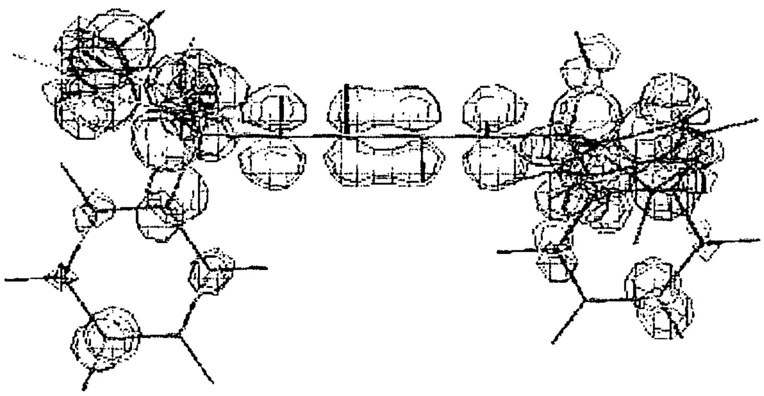

EXPLANATION OF REFERENCE NUMERALS

1······ OPTICAL INFORMATION RECORDING AND REPRODUCING APPARATUS, 2 ····· CONTROLLER, 5 ······ OPTICAL PICKUP,10 ······ RECORDING LIGHT SOURCE, 13 ······ OBJECTIVE LENS,15 ······ REPRODUCING LIGHT SOURCE, 19 ······ PHOTORECEPTOR,100 ······ OPTICAL INFORMATION RECORDING MEDIUM, 101 ······ RECORDING LAYER, t1, t2, t3 ······ THICKNESS, L1······ RECORDING LIGHT BEAM, L2 ······ READING LIGHT BEAM, L3 ······ RETURN LIGHT BEAM, RM ······ RECORDING MARK

**INTERNATIONAL SEARCH REPORT**

International application No.
PCT/JP2009/059100

A. CLASSIFICATION OF SUBJECT MATTER
*B41M5/26*(2006.01)i, *G03C1/73*(2006.01)i, *G11B7/24*(2006.01)i, *G11B7/244* (2006.01)i

According to International Patent Classification (IPC) or to both national classification and IPC

B. FIELDS SEARCHED

Minimum documentation searched (classification system followed by classification symbols)
B41M5/26, G03C1/73, G11B7/24, G11B7/244

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)
CAplus(STN), REGISTRY(STN)

C. DOCUMENTS CONSIDERED TO BE RELEVANT

| Category* | Citation of document, with indication, where appropriate, of the relevant passages | Relevant to claim No. |
|---|---|---|
| X | Reza Kagaku Kenkyu (1983), 5, p.152-157 | 9 |
| A | WO 2004/030919 A1 (Matsushita Electric Industrial Co., Ltd.), 15 April, 2004 (15.04.04), Page 9, line 21 to page 10, line 12 & US 2006/0072438 A1 | 1-8 |
| A | JP 61-203448 A (Mitsubishi Petrochemical Co., Ltd.), 09 September, 1986 (09.09.86), Page 2, lower left column, line 3 to lower right column, line 8 & US 4978736 A1 | 1-8 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 29 July, 2009 (29.07.09) | 11 August, 2009 (11.08.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.
PCT/JP2009/059100

C (Continuation). DOCUMENTS CONSIDERED TO BE RELEVANT

| Category* | Citation of document, with indication, where appropriate, of the relevant passages | Relevant to claim No. |
|---|---|---|
| A | WO 2004/022665 A1 (National Institute of Advanced Industrial Science and Technology), 18 March, 2004 (18.03.04), Page 7, line 49 to page 8, line 19 & JP 4195937 B | 1-8 |
| A | JP 2006-22025 A (National Institute of Advanced Industrial Science and Technology), 26 January, 2006 (26.01.06), Par. Nos. [0030], [0121] to [0125] (Family: none) | 1-8 |

Form PCT/ISA/210 (continuation of second sheet) (April 2007)

**INTERNATIONAL SEARCH REPORT**

International application No.
PCT/JP2009/059100

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:
1. The invention of claims 1 - 8 is an optical information recording medium having a recording layer containing a chemical compound, which is expressed by general formula (1).
2. The invention of claim 9 is a two-photon absorbing material made of a chemical compound, which is expressed by general formula (1).

1. ☒ As all required additional search fees were timely paid by the applicant, this international search report covers all searchable claims.
2. ☐ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005037658 A